# EUROPEAN PATENT APPLICATION

(11) **EP 1 666 629 A2**
(43) Date of publication of application: **07.06.2006**
(21) Application number: 05257404.3
(22) Date of filing: 01.12.2005
(51) Int. Cl.: C23C 14/08, C23C 14/16, C23C 8/02

(54) **Article protected by a diffusion-barrier layer and a platinum-group protective layer**

(30) Priority: 03.12.2004 US 3244
(71) Applicant: GENERAL ELECTRIC COMPANY, Schenectady, NY 12345 (US)
(72) Inventor: Gorman, Mark Daniel, West Chester Ohio 45069 (US); Giglioti, Michael Francis Xavier, Scotia New York 12302 (US); Darolia, Ramgopal, West Chester Ohio 45069 (US)
(74) Representative: Goode, Ian Roy

(57) **Abstract**

A protected article includes a substrate (30), and a protective structure (34) overlying the substrate (30). The protective structure (34) has a diffusion-barrier layer (36) overlying the substrate (30), wherein the diffusion-barrier layer (36) comprises at least about 70 percent by weight iridium, and a protective layer (40) overlying the diffusion-barrier layer (36) so that the diffusion-barrier layer (36) is between the substrate (30) and the protective layer (40). The protective layer (40) is at least about 70 percent by weight of a platinum-group element. A ceramic thermal barrier coating (44) may overlie the protective layer (40).

## Description

This invention relates to the protection of surfaces from excessive oxidation and, more particularly, to the prevention of excessive oxidation of a protective coating.

In an aircraft gas turbine (jet) engine, air is drawn into the front of the engine, compressed by a shaft-mounted compressor, and mixed with fuel. The mixture is burned, and the hot exhaust gases are passed through a turbine mounted on the same shaft. The flow of combustion gas turns the turbine by impingement against an airfoil section of the turbine blades and vanes, which turns the shaft and provides power to the compressor and fan. In a more complex version of the gas turbine engine, the compressor and a high pressure turbine are mounted on one shaft, and the fan and low pressure turbine are mounted on a separate shaft. The hot exhaust gases flow from the back of the engine, driving it and the aircraft forward.

The hotter the combustion and exhaust gases, the more efficient is the operation of the jet engine. There is thus an incentive to raise the combustion and exhaust-gas temperatures. The maximum temperature of the combustion gases is normally limited by the materials used to fabricate the turbine vanes and turbine blades of the turbine, upon which the hot combustion gases impinge. In current engines, the turbine vanes and turbine blades are made of nickel-based superalloys, and can operate at temperatures of up to about 1900-2150°F.

Many approaches have been used to increase the operating temperature limits of turbine blades, turbine vanes, and other hot-section components to their current levels. For example, the composition and processing of the base materials themselves have been improved, and a variety of solidification techniques have been developed to take advantage of oriented grain structures and single-crystal structures. Physical cooling techniques are also used.

The surfaces of the articles may be protected with an aluminum-containing protective coating, whose surface oxidizes to an aluminum oxide scale that inhibits further oxidation of the surfaces. However, the aluminum oxide scale is relatively permeable to oxygen. During service, oxygen diffuses from the environment and through the aluminum oxide scale to the underlying aluminum-containing protective coating, whereupon more aluminum oxide is formed. This formation of aluminum oxide is good to a point, but the formation of too thick an aluminum oxide scale may lead to spallation of the aluminum oxide scale, consumption of the aluminum in the aluminum-containing protective coating, and the loss of the protection of the underlying substrate. Excessive diffusion of oxygen may also lead to excessive oxidation of the underlying substrate.

Alternative approaches are under study for protecting substrates used in high-temperature service. In these alternative approaches, similar problems with excessive oxidation of the substrate are encountered. Accordingly, there remains a need for a protective structure that protects against oxidation of the substrate while resisting excessive oxidation of itself. The present invention fulfills this need, and further provides related advantages.

The present invention provides an article that is protected by a surface protective structure against damage which would otherwise occur during service at elevated temperature in a highly corrosive and oxidative environment. The primary utility is in protecting gas turbine components made of nickel-base alloys, such as nickel-base superalloys, against damage experienced in the operating environment of the turbine of the gas turbine engine. The problems associated with excessive thickening of an oxide scale are avoided, and oxidation of the underlying substrate is minimized.

A protected article comprises a substrate, and a protective structure overlying the substrate. The substrate is preferably a nickel-base alloy, and most preferably a nickel-base superalloy. The protective structure comprises a diffusion-barrier layer overlying the substrate, wherein the diffusion-barrier layer comprises at least about 70 percent by weight iridium, and a protective layer overlying the diffusion-barrier layer so that the diffusion-barrier layer is between the substrate and the protective layer. The protective layer is at least about 70 percent by weight of a platinum-group element selected from the group consisting of platinum, rhodium, palladium, and combinations thereof.

The diffusion-barrier layer may be substantially pure iridium, having at least 98 percent by weight iridium, or an alloy of iridium and one or more alloying elements. Examples of such alloying elements are rhodium, platinum, palladium, ruthenium, rhenium, tungsten, tantalum, molybdenum, aluminum, chromium, nickel, yttrium, scandium, and hafnium. In one embodiment, the diffusion-barrier layer is an iridium-aluminum alloy. The diffusion-barrier layer preferably has a thickness of from about 3 to about 30 micrometers, and most preferably from about 5 to about 20 micrometers.

The protective layer may be substantially only platinum-group metals, having at least 98 percent by weight of platinum, rhodium, palladium, and combinations thereof. The protective layer may instead be an alloy of platinum, rhodium, palladium, and combinations thereof, with an alloying element such as chromium, aluminum, iridium, zirconium, hafnium, and ruthenium. The protective layer preferably has a thickness of from about 8 to about 100 micrometers, and most preferably from about 10 to about 40 micrometers.

There may be a ceramic thermal barrier coating overlying the protective layer. The thermal barrier coating, when present, aids in insulating the underlying substrate, diffusion-barrier layer, and protective layer from the temperature of the combustion gas. A preferred protective layer is a yttria-stabilized-zirconia having from about 2 to about 12 percent by weight yttria, balance zirconia. The thermal barrier coating preferably has a thickness of from about 50 micrometers to about 300 micrometers, and most preferably from about 125 micrometers to about 200 micrometers.

In a preferred embodiment, a protected article comprises a nickel-base superalloy substrate, a protective structure overlying the substrate, and a ceramic thermal barrier coating overlying and contacting the protective layer. The protective structure comprises a diffusion-barrier layer overlying and contacting the substrate, wherein the diffusion-barrier layer comprises at least about 70 percent by weight iridium, and a protective layer overlying and contacting the diffusion-barrier layer so that the diffusion-barrier layer is between the substrate and the protective layer. The protective layer has at least about 70 percent by weight of a platinum-group element selected from the group consisting of platinum, rhodium, palladium, and combinations thereof. Other compatible specific embodiments and features as discussed herein may be used in conjunction with this embodiment.

The protective layer is based upon one or more platinum-group metals that themselves do not significantly oxidize, and can serve as either an environmental coating (when no ceramic thermal barrier coating is present) or a bond coat for a ceramic thermal barrier coating. The present approach provides a protective structure that does not necessarily (but may) include an aluminum-based protective coating whose oxidation protection involves the formation of an aluminum oxide scale (although aluminum may be present in smaller amounts). The oxidation protection of the substrate is therefore not dependent upon the presence of the aluminum oxide scale, which with prolonged exposure may become too thick and become subject to spallation. The protective layer is highly resistant to the corrosive components of the hot combustion gas, such as sulfides.

A shortcoming of the platinum-group-metal protective layer, if used by itself, is a relatively high permeability for oxygen that allows oxygen to diffuse from the combustion gas to the underlying substrate. The diffusion-barrier layer has a much lower permeability for oxygen. The diffusion-barrier layer inhibits, and ideally prevents, substantial diffusion of oxygen from the environment to the underlying substrate. The result of the use of the protective layer and the diffusion-barrier layer together is to protect the underlying substrate from corrosion and oxidation, without the formation of an aluminum oxide scale that may excessively thicken and eventually spall, leading to a local failure of the protection of the substrate.

The diffusion-barrier layer, the protective layer, and the ceramic thermal barrier coating may be applied by processes and procedures known in the art for other applications. Examples include sputtering, ion plasma, and electroplating of the diffusion-barrier layer and the protective layer, and physical vapor deposition and plasma spray techniques of the ceramic thermal barrier coating.

Other features and advantages of the present invention will be apparent from the following more detailed description of the preferred embodiment, taken in conjunction with the accompanying drawings, which illustrate, by way of example, the principles of the invention, and in which:
Figure 1 is a perspective view of a turbine blade;
Figure 2 is an enlarged schematic sectional view through the turbine blade of Figure 1, taken on lines 2-2;
Figure 3 is a schematic sectional view like that of Figure 2, illustrating another embodiment; and
Figure 4 is a block flow diagram of an approach for preparing a protected article.

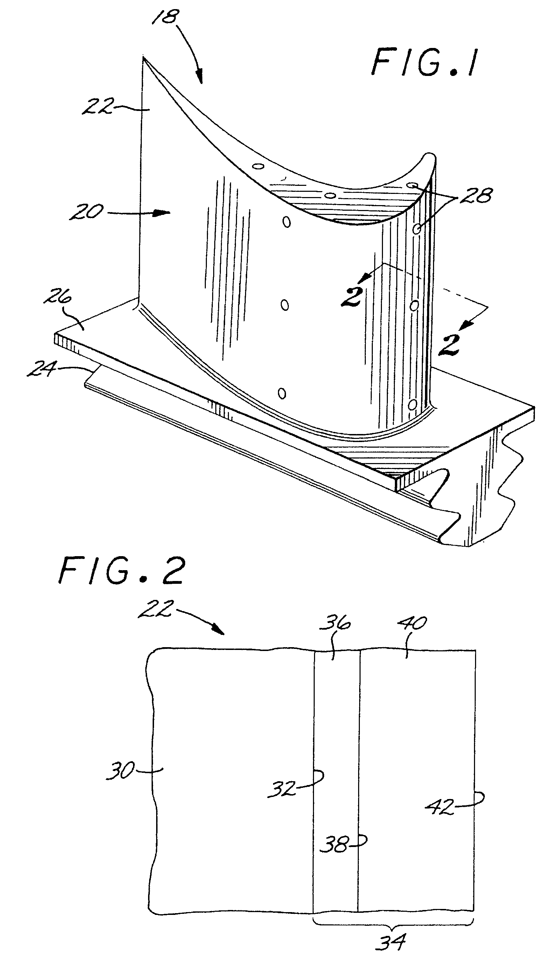

Figure 1 depicts a protected article 18 such as a turbine blade or turbine vane of a gas turbine engine, and in this illustration a turbine blade 20. The turbine blade 20 includes an airfoil 22 against which the flow of hot combustion gas is directed. (The turbine vane or nozzle has a similar appearance in respect to the pertinent airfoil, but typically includes other end structure to support the airfoil.) The turbine blade 20 is mounted to a turbine disk (not shown) by a dovetail 24 which extends downwardly from the airfoil 22 and engages a slot on the turbine disk. A platform 26 extends longitudinally outwardly from the area where the airfoil 22 is joined to the dovetail 24. Optionally, a number of internal passages extend through the interior of the airfoil 22, ending in openings 28 in the surface of the airfoil 22. During service, a flow of cooling air is directed through the internal passages to reduce the temperature of the airfoil 22.

Figures 2-3 (which are not drawn to scale) are sectional views through a portion of the turbine blade 20, here the airfoil 22, showing two embodiments of the present approach. The embodiments of Figures 2-3 are the same, and the following description applies to both embodiments, except for the differences discussed herein. The airfoil 22 of the turbine blade 20 has a body that serves as a substrate 30 with a substrate surface 32. The airfoil 22 of the turbine blade 20 is formed of any operable material, but is preferably a nickel-base alloy and most preferably a nickel-base superalloy. As used herein, "nickel-base" means that the composition has more nickel present than any other element. The nickel-base superalloys are typically of a composition that is strengthened by the precipitation of gamma-prime phase. Examples of nickel-base superalloys of interest include alloy Rene™ N5, which has a nominal composition in weight percent of about 7.5 percent cobalt, about 7.0 percent chromium, about 1.5 percent molybdenum, about 5 percent tungsten, about 3 percent rhenium, about 6.5 percent tantalum, about 6.2 percent aluminum, about 0.15 percent hafnium, about 0.05 percent carbon, about 0.004 percent boron, about 0.01 percent yttrium, balance nickel and minor elements, and Rene' N6, which has a nominal composition in weight percent of about 12.5 percent cobalt, about 4.2 percent chromium, about 1.4 percent molybdenum, about 5.75 percent tungsten, about 5.4 percent rhenium, about 7.2 percent tantalum, about 5.75 percent aluminum, about 0.15 percent hafnium, about 0.05 percent carbon, about 0.004 percent boron, about 0.01 percent yttrium, balance nickel and incidental impurities. The substrate 30 may be random polycrystalline, single crystal, or directionally oriented polycrystal.

A protective structure 34 overlies the substrate 30 and preferably contacts the substrate surface 32. The protective structure 34 includes a diffusion-barrier layer 36 overlying the substrate 30, and preferably contacting the substrate surface 32. The diffusion-barrier layer 36 comprises at least 70 percent by weight iridium. Iridium has a low permeability to oxygen, and accordingly the diffusion-barrier layer 36 provides a good barrier to diffusion of oxygen from the external environment into the substrate 30.

The diffusion-barrier layer 36 is preferably pure iridium, meaning in this case having at least 98 percent iridium, but it may be an iridium-containing alloy having one or more alloying elements. Examples of alloying elements that may be added to the iridium-base diffusion-barrier layer 36 include, for example, rhodium, platinum, palladium, ruthenium, rhenium, tungsten, tantalum, molybdenum, aluminum, chromium, nickel, yttrium, scandium, and hafnium. In one embodiment of interest, the protective structure 34 includes up to 13 percent by weight aluminum. The diffusion-barrier layer 36 preferably has a thickness of from 3 to 30 micrometers, and most preferably from 5 to 20 micrometers. The diffusion-barrier layer 36 has a barrier-layer surface 38 remote from the substrate surface 32.

The diffusion-barrier layer 36 may be deposited by any operable technique including, for example, electroplating, sputtering, and ion plasma deposition. The preferred electroplating technique for depositing iridium layers is known in the art for other purposes and is disclosed, for example, in US Patent 4,721,551 and 3,639,219.

The protective structure 34 further includes a protective layer 40 overlying the diffusion-barrier layer 36 so that the diffusion-barrier layer 36 is between the substrate 30 and the protective layer 40. The protective layer 40 preferably contacts the barrier-layer surface 38. The protective layer 40 comprises at least about 70 percent by weight of a platinum-group element selected from the group consisting of platinum, rhodium, palladium, and combinations thereof. These platinum-group elements are highly inert and resistant to oxidation attack and corrodants that are in the combustion gas of the gas turbine engine. This resistance to attack by corrodants is a characteristic of the platinum-group element, and does not require the formation of an oxide or other scale, coating, or layer on the surface of the protective layer 40. As a result, although some oxide layer may form, there is no concern with excessive thickening of an oxide layer, as is the case for diffusion aluminide and overlay aluminide coatings that depend upon the formation of an aluminum oxide scale for corrosion resistance.

Preferably, the protective layer 40 is formed purely of these platinum-group elements, in this case meaning that the protective layer 40 is at least 98 percent by weight platinum, rhodium, palladium, and combinations thereof, but it may include alloying elements. Examples of alloying elements that may be present in the protective layer 40 include chromium, aluminum, iridium, zirconium, hafnium, and ruthenium, and combinations thereof. The protective layer 40 preferably has a thickness of from 8 to 100 micrometers, more preferably from 10 to 40 micrometers. The protective layer 40 has a protective-layer surface 42 remote from the barrier-layer surface 38.

The protective layer 40 may be deposited by any operable technique including, for example, electroplating, sputtering, and ion plasma deposition.

The preferred electroplating technique for depositing such layers is known in the art for other purposes and is disclosed, for example, in US Patent 6,607,611.

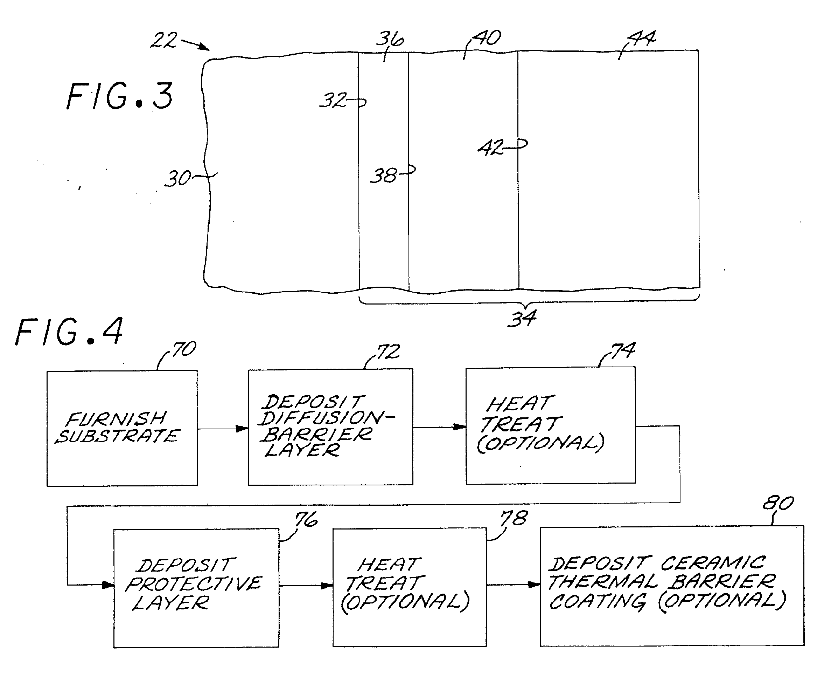

In the embodiment of Figure 2, the protective structure 34 is an environmental coating with no other layers thereon, and the protective-layer surface 42 is exposed to the external environment. In the embodiment of Figure 3, a ceramic thermal barrier coating 44 overlies the protective layer 40, and preferably contacts the protective-layer surface 42. In this case, the protective-layer 40 is termed a bond coat. The ceramic thermal barrier coating 44 provides thermal insulation against the high temperature of the combustion gas, which in the high-pressure turbine may be at a greater temperature than the melting point of the substrate 30. The ceramic thermal barrier coating 44 is preferably yttria-stabilized zirconia, which is zirconium oxide containing from about 2 to about 12 weight percent, preferably from about 6 to about 8 weight percent, of yttrium oxide. Other operable ceramic materials may be used as well.

The ceramic thermal barrier coating 44 may be deposited by any operable technique. Physical vapor deposition (e.g., electron beam physical vapor deposition) or thermal spray (e.g., air plasma spray) is preferred. Deposition techniques are discussed in US Patent 6,607,611. The ceramic thermal barrier coating 44 preferably has a thickness of from 50 micrometers to 300 micrometers, and most preferably from 125 micrometers to 200 micrometers. Figure 4 depicts the steps of an embodiment of a method for preparing the protected article 18. The substrate 30 is furnished, step 70. The substrate 30 is furnished in substantially the desired final size and shape. The diffusion-barrier layer 36 is thereafter deposited overlying the substrate 30, step 72, using the approach discussed above. The substrate 30 with the diffusion-barrier layer 36 deposited thereon is thereafter optionally heat treated to achieve a degree of interdiffusion between the substrate 30 and the diffusion-barrier layer 36, step 74. A typical heat treatment 74, when used, is from about 1800°F to about 2100°F for a time of from about 2 hours to about 16 hours. The protective layer 40 is thereafter deposited overlying the diffusion-barrier layer 36, step 76, using the approach discussed above. The substrate 30 with the diffusion-barrier layer 36 and the protective layer 40 deposited thereon is thereafter optionally heat treated to achieve a further degree of interdiffusion between the substrate 30 and the diffusion-barrier layer 36, and between the diffusion-barrier layer 36 and the protective layer 40, step 78. A typical heat treatment 78, when used, is from about 1800°F to about 2100°F for a time of from about 2 hours to about 16 hours. The ceramic thermal barrier coating 44 is thereafter optionally deposited overlying the protective layer 40, step 80, using the approach discussed above.

The present invention has been reduced to practice with layers applied to a different Rene N5 substrate for each of the following examples.

Example 1. A diffusion barrier layer of about 10 micrometers of iridium was applied to the substrate by sputtering, which was then heat treated at 2000°F in vacuum for 2 hours. A protective layer of platinum-rhodium alloy about 20 micrometers thick was applied over the diffusion-barrier layer by sputtering.

Example 2. A diffusion barrier layer of about 10 micrometers of iridium was applied to the substrate by sputtering, which was then heat treated at 2000°F in vacuum for 2 hours. A protective layer of platinum-rhodium alloy about 38 micrometers thick was applied by plating over the diffusion-barrier layer.

Example 3. A diffusion barrier layer of about 10 micrometers of iridium was applied to the substrate by sputtering, which was then heat treated at 2000°F in vacuum for 2 hours. A protective layer of platinum-rhodium alloy about 38 micrometers thick was applied by ion plasma deposition over the diffusion-barrier layer.

Example 4. A diffusion barrier layer of about 10 micrometers of iridium was applied to the substrate by sputtering, which was then heat treated at 2000°F in vacuum for 2 hours. A protective layer of platinum-rhodium alloy about 20 micrometers thick was applied over the diffusion-barrier layer by sputtering. A ceramic thermal barrier coating of 93 weight percent zirconia-7 weight percent yttria about 100 micrometers thick was applied over the protective layer by electron beam physical vapor deposition.

Example 5. A diffusion barrier layer of about 10 micrometers of iridium was applied to the substrate by sputtering, which was then heat treated at 2000°F in vacuum for 2 hours. A protective layer of platinum-rhodium alloy about 38 micrometers thick was applied by plating over the diffusion-barrier layer. A ceramic thermal barrier coating of 93 weight percent zirconia-7 weight percent yttria about 100 micrometers thick was applied over the protective layer by electron beam physical vapor deposition.

Example 6. A diffusion barrier layer of about 5 micrometers of iridium was applied to the substrate by sputtering, which was then heat treated at 2000°F in vacuum for 2 hours. A protective layer of platinum-rhodium alloy about 38 micrometers thick was applied by plating over the diffusion-barrier layer. A ceramic thermal barrier coating of 93 weight percent zirconia-7 weight percent yttria about 100 micrometers thick was applied over the protective layer by electron beam physical vapor deposition.

Example 7. A diffusion barrier layer of about 10 micrometers of iridium was applied to the substrate by sputtering, which was then heat treated at 2000°F in vacuum for 2 hours. A protective layer of platinum-rhodium alloy about 38 micrometers thick was applied by ion plasma deposition over the diffusion-barrier layer. A ceramic thermal barrier coating of 93 weight percent zirconia-7 weight percent yttria about 100 micrometers thick was applied over the protective layer by electron beam physical vapor deposition.

Example 8. A diffusion barrier layer of about 5 micrometers of iridium was applied to the substrate by sputtering, which was then heat treated at 2000°F in vacuum for 2 hours. A protective layer of platinum-rhodium alloy about 38 micrometers thick was applied by ion plasma deposition over the diffusion-barrier layer. A ceramic thermal barrier coating of 93 weight percent zirconia-7 weight percent yttria about 100 micrometers thick was applied over the protective layer by electron beam physical vapor deposition.

## Claims

1. A protected article comprising:
a substrate (30); and
a protective structure (34) overlying the substrate (30), wherein the protective structure (34) comprises
a diffusion-barrier layer (36) overlying the substrate (30), wherein the diffusion-barrier layer (36) comprises at least about 70 percent by weight iridium, and
a protective layer (40) overlying the diffusion-barrier layer (36) so that the diffusion-barrier layer (36) is between the substrate (30) and the protective layer (40), wherein the protective layer (40) has at least about 70 percent by weight of a platinum-group element selected from the group consisting of platinum, rhodium, palladium, and combinations thereof.

2. The protected article of claim 1, wherein the substrate (30) is a nickel-base alloy or superalloy.

3. The protected article of claim 1 or claim 2, wherein the diffusion-barrier layer (36) is at least about 98 percent by weight iridium.

4. The protected article of claim 1or claim 2, wherein the diffusion-barrier layer (36) further comprises one or more elements selected from the group consisting of rhodium, platinum, palladium, ruthenium, rhenium, tungsten, tantalum, molybdenum, aluminum, chromium, nickel, yttrium, scandium, and hafnium.

5. The protected article of claim 1or claim 2, wherein the diffusion-barrier layer (36) has a thickness of from about 3 to about 30 micrometers.

6. The protected article of claim 1 or claim 2, wherein the protective layer (40) is at least about 98 percent by weight platinum, rhodium, palladium, and combinations thereof.

7. The protected article of claim 1 or 2, wherein the protective layer (40) further comprises an element selected from the group consisting of chromium, aluminum, iridium, zirconium, hafnium, and ruthenium.

8. The protected article of claim 1 or claim 2, wherein the protective layer (40) has a thickness of from about 8 to about 100 micrometers.

9. The protected article of claim 1 or claim 2, wherein the protective structure (34) further includes
a ceramic thermal barrier coating (44) overlying the protective layer (40).

10. The protected article of claim 1 or claim 2, wherein the protective structure (34) further includes
a yttria-stabilized-zirconia thermal barrier coating (44) overlying the protective layer (40).
